# EUROPEAN PATENT APPLICATION

(11) **EP 3 854 289 A1**
(43) Date of publication of application: **28.07.2021**
(21) Application number: 19916577.0
(22) Date of filing: 04.07.2019
(51) Int. Cl.: A47L 15/16

(54) **DISHWASHING MACHINE**

(30) Priority: 25.02.2019 CN 201910138756
(71) Applicant: Foshan Shunde Midea Washing Appliances Manufacturing Co., Ltd., Foshan, Guangdong 528311 (CN); Midea Group Co., Ltd., Foshan, Guangdong 528311 (CN)
(72) Inventor: LIU, Chaopeng, Foshan, Guangdong 528311 (CN); CAI, Siqi, Foshan, Guangdong 528311 (CN)
(74) Representative: Lam, Alvin
(86) International application number: PCT/CN2019/094709
(87) International publication number: WO 2020/173032

(57) **Abstract**

A dishwashing machine (100), the dishwashing machine (100) comprising a washing system (10) and a heat pump system (20), the washing system (10) comprising a washing pump (12), the heat pump system (20) comprising a first heat exchange apparatus (21), a compressor (22), a second heat exchange apparatus (23) and a throttle apparatus (24), the first heat exchange apparatus (21) comprising a first communicating component (211) and a second communicating component (212); the first communicating component (211), the compressor (22), the second heat exchange apparatus (23) and the throttle apparatus (24) being connected in series so as to form a refrigerant flow sealed loop; the second communication component (212) being connected to the first communication component (211), so as to perform convection with refrigerant in the first communication component (211), the second heat exchange apparatus (23) being configured so as to perform heat exchange with a pipeline (14) of the washing system (10), so as to heat washing liquid entering a cavity (11).

## Description

### PRIORITY INFORMATION

This application claims priority to and benefits of Chinese Patent Application No. 201910138756.5, filed with National Intellectual Property Administration of PRC on February 25, 2019, the entire content of which is incorporated herein by reference.

### FIELD

The present disclosure relates to the field of household machines, and more particularly to a washing appliance.

### BACKGROUND

In the related art, when a dishwasher adopts heat-pump heating technology, a condenser is usually directly connected to a water flow system of the dishwasher. During the washing process, the washing water directly passes through the condenser and is circulated to be heated to a specified temperature to achieve the high-temperature washing of the tableware. However, in the related art to heat the heat exchange efficiency between the evaporator and the air is low when the heat-pump technology is adopted, as a result, the washing water cannot be heated sufficiently. In addition, the cold energy generated during the working process of the heat pump system is discharged by the fan in the form of cold air after the heat exchange, which easily causes a decrease in the temperature of the kitchen, and the noise of the fan is large, which affects the user experience.

### SUMMARY

The present disclosure provides a washing appliance.

The washing appliance according to the embodiments of the present disclosure, including:
a washing system and a heat pump system. The washing system includes a cavity. The heat pump system includes a first heat exchange device, a compressor, a second heat exchange device, and a throttling device. The first heat exchange device includes a first communicating component and a second communicating component, the first communicating component, the compressor, the second heat exchange device, and the throttling device are sequentially connected to form a closed circuit in which refrigerant flows. The second communicating component is connected to the first communicating component to perform convective heat exchange with the refrigerant in the first communicating component, and the second heat exchange device is configured to perform heat exchange with a pipeline of the washing system to heat washing liquid entering the cavity.

In the above-described washing appliance, the second communicating component and the first communicating component use convective heat exchange, so that the heat exchange efficiency is high. When the washing water needs to be heated, the refrigerant in the first communicating component fully absorbs heat and vaporizes into low-pressure vapor, and then the compressor can compress the above low-pressure vapor into the high-temperature and high-pressure vapor, and the above high-temperature and high-pressure vapor enters the second heat exchange device to realize fully heating of the washing liquid of the washing system. In addition, the cold energy generated during the working process of the heat pump system after heat exchange does not need to be discharged in the form of cold air through a fan, which will not cause the temperature of the kitchen to decrease, reduce noise, and improve user experience.

In some embodiments, the heat pump system includes a cold storage device. The cold storage device is provided with a cold storage agent. The first heat exchange device is arranged in the cold storage device. The cold storage device is configured to perform heat exchange with the refrigerant in the first communicating component through the cold storage agent.

In some embodiments, the cold storage device is a water tank, and the cold storage agent is water.

In some embodiments, the first communicating component is immersed in the cold storage agent.

In some embodiments, the heat pump system comprises a circulating pump, the second communicating component is in communication with an inside of the cold storage device, and the circulating pump is connected to the second communicating component and the cold storage device through a pipe connection to circulate the cold storage agent.

In some embodiments, a flow direction of the liquid in the second communicating component is opposite to a flow direction of the refrigerant in the first communicating component.

In some embodiments, the first communicating component defines a first cavity therein, and the second communicating component is at least partially located in the first cavity.

In some embodiments, the second communicating component has a tubular structure, and the part of the second communicating component located in the first cavity is bent.

In some embodiments, the washing appliance includes a third heat exchange device, the third heat exchange device is connected to the second communicating component and the cold storage device through a pipe connection, and the third heat exchange device is configured to perform heat exchange between the cold storage agent flowing through the third heat exchange device and air.

In some embodiments, the washing appliance includes a fan device, and the fan device is used for cooling the third heat exchange device.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These above and/or additional aspects and advantages of embodiments of the present disclosure will become apparent and more readily appreciated from the following descriptions made with reference to the accompanying drawings, in which:
FIG. 1 is a schematic structural view of a washing appliance according to an embodiment of the present disclosure;
FIG. 2 is a schematic structural view of a heat pump system of a washing appliance according to an embodiment of the present disclosure; and
FIG. 3 is another schematic structural view of the heat pump system of the washing appliance according to an embodiment of the present disclosure.

Symbol description of main elements:
washing appliance 100, washing system 10, cavity 11, water cup 111, washing pump 12, spray arm assembly 13, pipeline 14, heat pump system 20, first heat exchange device 21, first communicating component 211, first housing 2110, first cavity 2111, second communicating component 212, compressor 22, second heat exchange device 23, third communicating component 231, second housing 2310, second cavity 2311, fourth communicating component 232, throttling device 24, cold storage device 25, case 251, circulating pump 26, third heat exchange device 30, fan device 31.

### DETAILED DESCRIPTION

Embodiments of the present application will be described in detail below, and the examples of the embodiments will be illustrated in the drawings. The same or similar elements and the elements having same or similar functions are denoted by like reference numerals throughout the description. The embodiments described herein with reference to the drawings are illustrative and used to generally understand the present disclosure. The embodiments shall not be construed to limit the present disclosure.

In the description of the present disclosure, relative terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," and the like should be constructed to refer to the orientation or position as then described or as shown in the drawings under discussion. These relative terms are for convenience and simplification of description and do not indicate or imply that the device or element referred to must have a particular orientation, or be constructed and operated in a particular orientation, so these terms shall not be construed to limit the present disclosure. Furthermore, terms "first," "second," are used for descriptive purpose only, and cannot be construed to indicate or imply relative importance or implicitly indicate the number of technical features indicated. Therefore, the features defined with "first," "second," can explicitly or implicitly include at least one of the features. In the description of the present disclosure, the term "a plurality of' means at least two, for example, two, three, and the like, unless specified or limited otherwise.

In the descriptions, unless specified or limited otherwise, the terms "mounted," "connected," "coupled," and variations thereof should be understood broadly. For example, these may be permanent connections, detachable connections or integrated; mechanical connections, electrical connections, direct connections or indirect connections via intervening structures; inner communication or interaction of two elements. Those skilled in the related art may understand specific meanings of the above terms in the present disclosure according to specific situations.

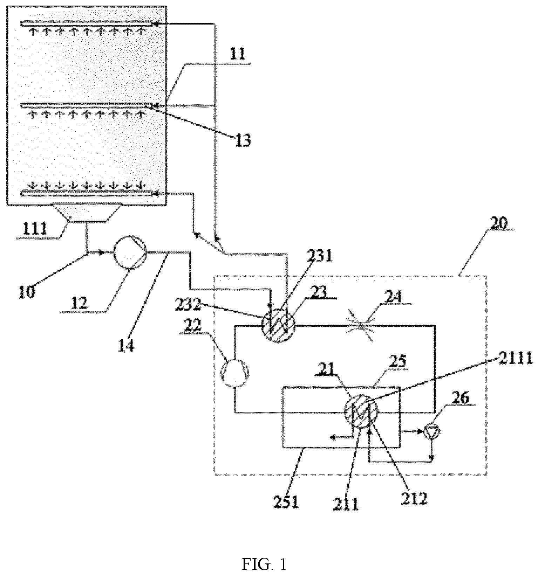

Referring to FIG. 1, a washing appliance 100 of the embodiments of the present disclosure includes a washing system 10 and a heat pump system 20. For example, the washing appliance 100 is a dishwasher. It can be understood that the washing appliance can also be other appliances that use water, such as a clothes washing machine.

Referring to FIG. 1, the washing system 10 includes a cavity 11 and a washing pump 12. The washing pump 12 is connected to the cavity 11 through a pipe connection. The heat pump system 20 includes a first heat exchange device 21, a compressor 22, a second heat exchange device 23, and a throttling device 24. The first heat exchange device 21 includes a first communicating component 211 and a second communicating component 212. The first communicating component 211, the compressor 22, the second heat exchange device 23, and the throttling device 24 are connected sequentially to from a closed circuit in which refrigerant flows. The second communicating component 212 is connected to the first communicating component 211 to perform convective heat exchange with the refrigerant in the first communicating component 211. The second heat exchange device 23 is configured to perform heat exchange with a pipeline of the washing system 10 to heat washing liquid entering the cavity 11.

Specifically, when the heat pump system 20 operates, the first heat exchange device 21 is used as an evaporator, and the refrigerant in the first communicating component 211 is vaporized into low-pressure vapor by absorbing the heat. A heat exchange mode between the second communicating component 212 and the first communicating component 211 is an indirect heat exchange. A flow direction of the liquid (for example, water) in the second communicating component 212 is opposite to a flow direction of the refrigerant in the first communicating component 211 to realize convective heat exchange between the second communicating component 212 and the first communicating component 211. The compressor 22 can compress the above low-pressure vapor into a high-temperature and high-pressure vapor. The second heat exchange device 23 is used as a condenser, and the heat of the high-temperature and high-pressure vapor in the second heat exchange device 23 is transferred to the pipeline of the washing system 10 to heat the washing liquid of the washing system 10. The throttling device 24 is used to throttle the above high-temperature and high-pressure vapor after heat exchange into a low-temperature and low-pressure liquid. The above low-temperature and low-pressure liquid flows back to the first communicating component 211 to absorb heat again to evaporate, and the next cycle begins. The washing pump 12 can pump the heated washing liquid into the cavity 11 to clean the tableware located in the cavity 11. It can be understood that the washing liquid may be water or a mixed liquid of water and detergent.

It can be understood that the first communicating component can include one or more first heat exchange tubes, and the second communicating component can include one or more second heat exchange tubes. The first heat exchange tube and the second heat exchange tube can employ a structure of concentric tubes to promote the convective heat exchange between the first communicating component and the second communicating component. The connection mode of the first communicating component 211 and the second communicating component 212 of this embodiment is described in detail below.

Referring to FIG. 1, the washing system 10 includes a spray arm assembly 13. The washing pump 12 is separately connected to the cavity 11 and the spray arm assembly 13 through the pipeline 14. A water cup 111 is formed at a lower part of the cavity 11 for collecting the washing liquid in the cavity 11. The spray arm assembly 13 is arranged in the cavity 11, the washing pump 12 is arranged outside the cavity 11, and the washing pump 12 is connected to the water cup 111 and the spray arm assembly 13 through the pipeline 14. When the washing appliance 100 is used for washing, the washing system 10 is started, and the washing pump 12 continuously conveys the washing liquid in the water cup 111 to the respective spray arms of the spray arm assembly 13 through the pipeline 14, so as to achieve the purpose of cleaning items (as illustrated by the arrows on the pipeline of the washing system 10 in FIG. 1). When hot water is needed for washing, the heat pump system 20 starts to operate, and the heat of the high-temperature and high-pressure vapor in the second heat exchange device 23 is transferred to the pipeline of the washing system 10 to heat the washing liquid of the washing system 10. The heated washing liquid is conveyed to the respective spray arms of the spray arm assembly 13 through the pipeline 14 under the pumping action of the washing pump 12.

In an example illustrated in FIG. 1, the spray arm assembly 13 has a spray arm. In other embodiments, the number of spray arms of the spray arm assembly 13 can be specifically adjusted, which is not specifically limited herein. In the example of the present disclosure, the washing appliance 100 is a dishwasher, which has a spray arm assembly 13. In other examples, the washing appliance 100 may be an appliance that uses water such as a clothes washing machine, and the clothes washing machine can omit the spray arm assembly.

It should be noted that the compressor 22 can be a horizontal compressor or a vertical compressor, and the second heat exchange device can be a condenser or a condensing tube, which is not specifically limited and can be determined according to actual conditions.

The throttling device 24 includes an expansion valve. The low-temperature and high-pressure liquid refrigerant formed after being condensed by the second heat exchange device 23 becomes a low-temperature and low-pressure mist hydraulic refrigerant after being throttled by the orifice of the expansion valve, creating conditions for the evaporation of the refrigerant. Of course, the throttling device 24 can also be of other types, such as a capillary tube, etc., which is not specifically limited.

In summary, the second communicating component 212 and the first communicating component 211 use a convective heat exchange, so that the heat exchange efficiency is high. When the washing water needs to be heated, the refrigerant in the first communicating component 211 fully absorbs heat and vaporizes into low-pressure vapor, and then the compressor 22 can compress the above low-pressure vapor into the high-temperature and high-pressure vapor, and the above high-temperature and high-pressure vapor enters the second heat exchange device 23 to realize fully heating of the washing liquid of the washing system 10. In addition, the cold energy generated during the working process of the heat pump system 20 after heat exchange does not need to be discharged in the form of cold air through a fan, which will not cause the temperature of the kitchen to decrease, reduce noise, and improve the user experience. In some embodiments, the heat pump system 20 includes a cold storage device 25. The cold storage device 25 is provided with a cold storage agent (not illustrated). The first heat exchange device 21 is arranged in the cold storage device 25. The cold storage device 25 is configured to perform heat exchange with the refrigerant in the first communicating component 211 through the cold storage agent. In this way, the area of heat exchange between the refrigerant of the first communicating component 211 and the outside can be increased, and the latent heat in the cold storage agent can be effectively used, that is, the refrigerant in the first communicating component 211 can also effectively absorb the heat in the cold storage agent.

It should be noted that, for example, the cold storage agent is water or a cold storage material. In some examples, the cold storage device 25 is a water tank, and the cold storage agent is water.

In some embodiments, the first heat exchange device 21 is immersed in the cold storage agent. In this way, the area of heat exchange between the cold storage device 25 and the first communicating component 211 is large, and the latent heat in the cold storage agent can be fully utilized effectively. In addition, the first heat exchange device 21 is immersed in the cold storage agent, which can also prevent the outside of the first communicating component 211 from freezing.

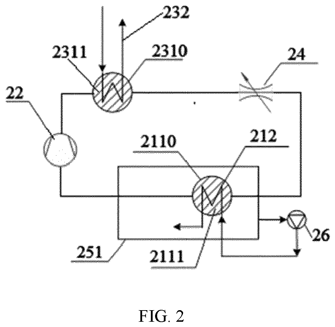

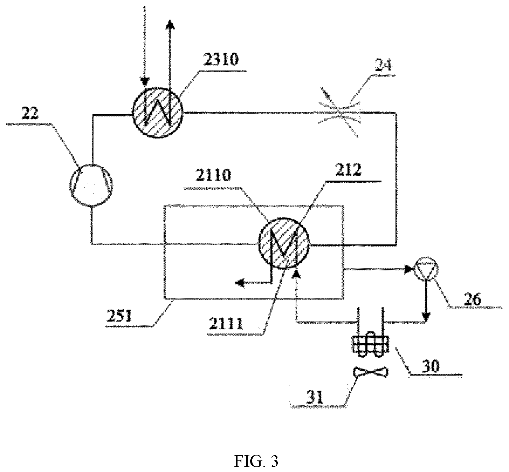

Referring to FIGS. 2 and 3, in some embodiments, the heat pump system 20 includes a circulating pump 26. The second communicating component 212 is in communication with an inside of the cold storage device 25. The circulating pump 26 is connected to the second communicating component 212 and the cold storage device 25 through a pipe connection to circulate the cold storage agent.

Specifically, the cold storage device 25 includes a case 251. The cold storage agent is provided in the case 251. The circulating pump 26 is located outside the case 251. The first heat exchange device 21 is arranged in the case 251. The cold storage agent inside the case 251 can quickly flow through the second communicating component 212 under the pumping action of the circulating pump 26 and then return to the cold storage device 25 (as illustrated by the arrows in FIGS. 2 and 3), the heat exchange efficiency between the refrigerant in the first communicating component 211 and the cold storage agent can be enhanced, and the heat exchange area of the first heat exchange device 21 can be greatly reduced. When the first communicating component and the second communicating component employ a tubular structure, the length of the pipeline of the first heat exchange device can also be shortened, so that the design of the first heat exchange device is more compact.

In some embodiments, the first communicating component 211 defines a first cavity 2111 therein. The second communicating component 212 is at least partially located in the first cavity 2111.

Specifically, the first communicating component 211 has a first housing 2110. The first housing 2110 defines the first cavity 2111 therein. The first housing 2110 can be made of corrosion and high-pressure resistant materials. The second communicating component 212 may adopt a tubular structure, and the second communicating component 212 is resistant to corrosion and high pressure. At least part of the second communicating component 212 is located in the first cavity 2111. After being throttled by the throttling device 24, the low-temperature and low-pressure gas-liquid two-phase refrigerant flows into the first cavity 2111, and can exchange heat with the cold storage agent in the case 251 through a wall of the first housing 2110, and can also perform a forced convective heat exchange with the cold storage agent in the second communicating component 212 through a wall surface of the second communicating component 212. Under this heat exchange, the internal refrigerant of the first communicating component 211 releases cold energy into the cold storage agent amount in two directions, so that the low-temperature and low-pressure gas-liquid two-phase refrigerant flowing from the throttling device 24 quickly vaporizes into a superheated gaseous refrigerant and flows into the compressor 22.

It can be understood that when the first housing 2110 has a tubular structure and the second communicating component 212 has a tubular structure, the volume of the first cavity 2111 can be adjusted by controlling an outer diameter of the second communicating component 212 and an inner diameter of the first housing 2110. The first heat exchange device 21 of this embodiment does not cause an increase in filling volume of the refrigerant of the heat pump system 20. The first heat exchange device 21 of this embodiment not only can reduce the refrigerant charge, but also can reduce the pressure drop of the first heat exchange device 21 to a certain extent, so that the heating efficiency of the heat pump system 20 can be increased.

In some embodiments, the second communicating component 212 has a tubular structure, and a part of the second communicating component 212 located in the first cavity 2111 is bent. In this way, the area for heat exchange between the second communicating component 212 and the first communicating component 211 can be increased.

In some embodiments, the second heat exchange device 23 includes a third communicating component 231 and a fourth communicating component 232. The first communicating component 211, the compressor 22, the third communicating component 231, and the throttling device 24 are sequentially connected to form a closed circuit in which the refrigerant flows. The third communicating component 231 exchanges heat with the pipeline of the washing system 10 through the fourth communicating component 232. The third communicating component 231 is heat-conductively connected to the fourth communicating component 232, and the high-temperature and high-pressure vapor compressed by the compressor 22 enters the third communicating component 231 to perform indirect heat exchange with the liquid (for example, the washing liquid) in the fourth communicating component 232 to heat the washing liquid in the pipeline of the washing system 10, so that the heat exchange efficiency is high.

In some embodiments, the third communicating component 231 defines a second cavity 2311 therein. The fourth communicating component 231 is at least partially located in the second cavity 2311.

The third communicating component 231 has a second housing 2310. The second housing 2310 defines a second cavity 3111 therein. The second housing 2310 can be made of corrosion and high-pressure resistant materials. The fourth communicating component 232 may adopt a tubular structure, and the fourth communicating component 232 is resistant to corrosion and high pressure. At least part of the fourth communicating component 232 is located in the second cavity 3111. The high-temperature and high-pressure vapor compressed by the compressor 22 enters the third communicating component 231, and can perform forced convective heat exchange with the cold storage agent in the fourth communicating component 232 through the wall surface of the fourth communicating component 232 (as illustrated in FIG. 2 and as illustrated by arrows in FIG. 2).

It can be understood that, in order to increase the heat exchange area, the part of the third communicating component 231 located in the second cavity 2311 may be bent.

Referring to FIG. 3, in some embodiments, the washing machine 100 includes a third heat exchange device 30. The third heat exchange device 30 is connected to the second communicating component 212 and the cold storage device 25 through a pipe connection. The third heat exchange device 30 is configured to exchange heat between the cold storage agent flowing through the third heat exchange device 30 and air.

It should be noted that the third heat exchange device 30 may be directly connected to the cold storage device 25 and the second communicating component 212, or may be indirectly connected to the cold storage device 25 and the second communicating component 212. In the example illustrated in FIG. 3, the pipeline at an end of the circulating pump 26 is in communication with the case 251, and the pipeline at the other end of the circulating pump 26 is in communication with the second communicating component 212. The cold storage agent inside the case 251 can flow out of the case 251 under the pumping action of the circulating pump 26, and exchange heat with the air through the third heat exchange device 30 to absorb the heat of the air. The temperature difference between the cold storage agent and the refrigerant in the tank 251 can be increased.

Referring to FIG. 3, in some embodiments, the washing machine 100 includes a fan device 31. The fan device 31 is used to cool the third heat exchange device 30. The provision of the fan device 31 can improve the efficiency of heat exchange between the cold storage agent flowing through the third heat exchange device 30 and the air.

In the present disclosure, unless specified or limited otherwise, a structure in which a first feature is "on" or "below" a second feature may include an embodiment in which the first feature is in direct contact with the second feature, and may also include an embodiment in which the first feature is in indirect contact with the second feature through intermediaries. Furthermore, a first feature "on," "above," or "on top of' a second feature may include an embodiment in which the first feature is right "on," "above," or "on top of' the second feature, and may also include an embodiment in which the first feature is diagonally "on," "above," or "on top of' the second feature, or just means that the first feature is at a height higher than that of the second feature. A first feature "beneath," "below," or "on bottom of' a second feature may include an embodiment in which the first feature is right "beneath," "below," or "on bottom of' the second feature, and may also include an embodiment in which the first feature is diagonally "beneath," "below," or "on bottom of' the second feature, or just means that the first feature is at a height lower than that of the second feature.

The present disclosure provides many different embodiments or examples for realizing different structures of the present disclosure. In order to simplify the disclosure of the present disclosure, the components and arrangements of specific examples are described herein. Of course, they are only examples, and are not intended to limit the present disclosure. In addition, the present disclosure may repeat reference numerals and/or reference letters in different examples, and this repetition is for the purpose of simplification and clarity, and does not indicate the relationship between the various embodiments and/or arrangements discussed. In addition, the present disclosure provides examples of various specific processes and materials, but those of ordinary skill in the art may be aware of the application of other processes and/or the use of other materials.

In the description of the present specification, reference throughout this specification to "an embodiment," "some embodiments," "an exemplary embodiment", "an example," "a specific example," or "some examples" means that a particular feature, structure, material, or characteristic described in connection with the embodiment or example is included in at least one embodiment or example of the present disclosure. In the specification, the appearances of the above-mentioned terms are not necessarily referring to the same embodiment or example of the present disclosure. Furthermore, the particular features, structures, materials, or characteristics may be combined in any suitable manner in one or more embodiments or examples.

Although embodiments of the present disclosure have been shown and described, it shall be appreciated by those skilled in the art that various changes, modifications, alternatives, and variations can be made in the embodiments without departing from principles and purposes of the present disclosure. The scope of the present disclosure is defined by claims or their equivalents.

## Claims

1. A washing appliance, comprising:
a washing system comprising a cavity;
a heat pump system comprising a first heat exchange device, a compressor, a second heat exchange device, and a throttling device, wherein the first heat exchange device comprises a first communicating component and a second communicating component; the first communicating component, the compressor, the second heat exchange device, and the throttling device are sequentially connected to form a closed circuit in which refrigerant flows; the second communicating component is connected to the first communicating component to perform convective heat exchange with the refrigerant in the first communicating component; and the second heat exchange device is configured to perform heat exchange with a pipeline of the washing system to heat a washing liquid entering the cavity.

2. The washing appliance according to claim 1, wherein the heat pump system comprises a cold storage device, the cold storage device is provided with a cold storage agent, the first heat exchange device is arranged in the cold storage device, and the cold storage device is configured to perform heat exchange with the refrigerant in the first communicating component through the cold storage agent.

3. The washing appliance according to claim 2, wherein the cold storage device is a water tank, and the cold storage agent is water.

4. The washing appliance according to claim 3, wherein the first communicating component is immersed in the cold storage agent.

5. The washing appliance according to claim 2, wherein the heat pump system comprises a circulating pump, and the circulating pump is connected to the second communicating component and the cold storage device through a pipe connection to circulate the cold storage agent.

6. The washing appliance according to claim 1, wherein a flow direction of liquid in the second communicating component is opposite to a flow direction of the refrigerant in the first communicating component.

7. The washing appliance according to claim 1, wherein the first communicating component defines a first cavity therein, and the second communicating component is at least partially located in the first cavity.

8. The washing appliance according to claim 7, wherein the second communicating component has a tubular structure, and a part of the second communicating component located in the first cavity is bent.

9. The washing appliance according to claim 2, wherein the washing appliance comprises a third heat exchange device, the third heat exchange device is connected to the second communicating component and the cold storage device through a pipe connection, and the third heat exchange device is configured to perform heat exchange between the cold storage agent flowing through the third heat exchange device and air.

10. The washing appliance according to claim 9, wherein the washing appliance comprises a fan device, and the fan device is used for cooling the third heat exchange device.
